# EUROPEAN PATENT SPECIFICATION

(11) **EP 4 266 216 B1**
(45) Date of publication and mention of the grant of the patent: **19.11.2025**
(21) Application number: 22169013.4
(22) Date of filing: 20.04.2022
(51) Int. Cl.: G06N 3/04, G06N 3/08

(54) **LEARNING METHOD AND LEARNING DEVICE FOR TRAINING OBFUSCATION NETWORK CAPABLE OF OBFUSCATING ORIGINAL DATA FOR PRIVACY TO ACHIEVE INFORMATION RESTRICTION OBFUSCATION AND TESTING METHOD AND TESTING DEVICE USING THE SAME**
LERNVERFAHREN UND LERNVORRICHTUNG ZUM TRAINIEREN EINES OBFUSKATIONSNETZWERKS MIT FÄHIGKEIT ZUR OBFUSKATION VON ORIGINALDATEN FÜR DATENSCHUTZ ZUR ERREICHUNG VON INFORMATIONSBESCHRÄNKUNGSOBFUSKATION SOWIE PRÜFVERFAHREN UND PRÜFVORRICHTUNG DAMIT
PROCÉDÉ ET DISPOSITIF D'APPRENTISSAGE POUR LA FORMATION D'UN RÉSEAU D'OBFUSCATION CAPABLE D'OBSCURCISSIR DES DONNÉES ORIGINALES À DES FINS DE CONFIDENTIALITÉ POUR OBTENIR UN BROUILLAGE DES RESTRICTIONS D'INFORMATIONS ET PROCÉDÉ ET DISPOSITIF D'ESSAI LES UTILISANT

(43) Date of publication of application: 25.10.2023
(73) Proprietor: Deeping Source Inc., Seoul 06152 (KR)
(72) Inventor: JEONG, Jong Hu, 08748 Seoul (KR)
(74) Representative: AWA Sweden AB

(56) References cited:
- US-A1- 2021 141 926
- US-B1- 11 200 342
- US-B1- 11 244 248
- SINGH ABHISHEK ET AL: "DISCO: Dynamic and Invariant Sensitive Channel Obfuscation for deep neural networks", 2021 IEEE/CVF CONFERENCE ON COMPUTER VISION AND PATTERN RECOGNITION (CVPR), IEEE, 20 June 2021 (2021-06-20), pages 12120 - 12130, XP034008778, DOI: 10.1109/CVPR46437.2021.01195

## Description

The present disclosure relates to a method for training an obfuscation network capable of obfuscating, e.g., anonymizing or concealing, an original data for privacy and a learning device using the same, and to a method for testing the trained obfuscation network capable of obfuscating the original data and a testing device using the same.

In recent years, machine learning as a service (MLaaS) has gained great popularity mainly due to the advances in cloud computing and deep learning. Oftentimes raw data generated on an edge device is sent to the cloud, where it is then processed and machine learning algorithms are applied to learn patterns from the data.

However, sending the raw data has the drawback that privacy-related information is directly leaked to the cloud server, which might constitute a violation of user privacy.

For example, we can consider the edge device transmitting images to the cloud, to perform person identification. While a picture of a person can be used for identification, the image can further reveal the person's gender, emotional state, race, or location. Ideally, privacy-related information should be removed from the image, while preserving task utility.

Additionally, such a private data representation should be secure against attacks from adversarial actors, who attempt to breach a user's privacy by retrieving private attributes from the private data representation. It is important to note that the service provider might be considered as a possible adversarial actor, so the client would want a model to fully remove utility unrelated information, since the representation transmitted from the client is out of their control.

To mitigate the leakage of sensitive attributes, many works have focused on the training framework of adversarial representation learning (ARL).

ARL has found its application in practical scenarios, such as information censoring, learning fair representations, the mitigation of information leakage, or collaborative inference. Commonly, the ARL framework consists of three entities, (1) an obfuscator, which transforms input data to representation that retains utility, while resolving the correlation of image features to sensitive attributes, (2) a task model, performing the utility task on the data representation, and (3) a proxy-adversary, attempting to extract sensitive attributes.

With the above scenario of MLaaS, the service provider trains the obfuscator and the task model and deploys the obfuscator to the user's client device. For the sake of the user's privacy, the obfuscator should effectively remove all information unrelated to the utility task and retain high utility with obfuscated representation.

However, previous ARL methods have focused on the task utility, i.e., privacy-utility trade-off.

In the previous ARL methods, the obfuscator is trained to generate obfuscated representation having a high task utility from the inputted data by removing all pieces of the information unrelated to the utility task.

Therefore, the trained obfuscator requires significant computations and computing resources to generate the obfuscated representation from the inputted data.

When such trained obfuscator requiring the significant computations and computing resources is installed on the edge device such as a mobile device with a limited computing resource, there is a problem in the obfuscator not functioning properly and consuming a lot of time to process the inputted data.

There exist several different approaches of enabling the sharing of privacy-safe data. Such method is disclosed in US 11,200,342 Bl relating to training an obfuscation network to obfuscate data for privacy. Training data is inputted into an obfuscation network to generate obfuscated training data, which is thereafter inputted into a compression network to generate compression adaptive obfuscated training data. The original training data and the compression adaptive obfuscated training data is thereafter inputted into a learning network to generate first and second characteristic info, relating to the compression adaptive obfuscated training data and the original training data, respectively. The obfuscation network is then trained to minimize a first error by comparing the first and second characteristic information, and to maximize a second error by comparing the original training data and the compression adaptive obfuscated training data.

Another method is further disclosed in US 2021/0141926 Al, relating to enabling the sharing of privacy-safe data with deep poisoning functions. This is achieved by the use of four different machine learning (ML) models: A first ML model trained to generate feature representations, a second ML model trained for a desired task, a third ML model trained for an undesired task, and a fourth ML model comprising a deep poisoning function to be trained to generate secured feature representations, based on input from the first, second, and third ML models. The fourth ML model is trained by updating its parameters, whilst the parameters of the first, second, and third ML models are kept fixed.

It is an object of the present disclosure to solve all the aforementioned problems.

It is another object of the present disclosure to provide an obfuscation network that is robust to attacks by adversarial actors while task utility is preserved.

It is still another object of the present disclosure to provide the obfuscation network that minimizes the use of computing resources in an edge device.

It is still yet another object of the present disclosure to provide the obfuscation network that can easily be applied to
an off-the-shelf deep neural network (DNN).

It is still yet another object of the present disclosure to provide the obfuscation network that can easily be applied to a commonly used DNN.

In order to accomplish objects above, representative structures of the present disclosure are described as follows:
In accordance with one aspect of the present disclosure, there is provided a learning method for training an obfuscation network capable of obfuscating an original data for privacy, including steps of: (a) a learning device inputting a training data into the obfuscation network, to thereby instruct the obfuscation network to (i) extract features to be used for performing a task of a task learning network and thus generate a data representation including the extracted features by performing a learning operation on the training data and (ii) transform the data representation and thus generate an anonymized data representation as an obfuscated data in which privacy-related information of the training data is protected and task utility is preserved; and (b) the learning device inputting the anonymized data representation into the task learning network, to thereby instruct the task learning network to (i) perform the task by using the anonymized data representation and thus output a task result, (ii) generate a task loss by referring to the task result and its corresponding ground truth, (iii) train the task learning network through a first backpropagation of the task loss such that the task loss is minimized, and (iv) train the obfuscation network through a second backpropagation of the task loss such that the task loss is minimized.

As one example, at the step of (a), the learning device inputs the training data into the obfuscation network, to thereby instruct the obfuscation network to (i) generate the data representation by encoding the training data through an encoding network, and (ii) generate the anonymized data representation by reducing the features included in the data representation through an information reduction module.

As one example, the learning device instructs the obfuscation network to perform at least one of (i) a frequency filtering process by passing at least one preset frequency band or rejecting the preset frequency band of the data representation, (ii) a noise addition process by adding noise to the data representation, (iii) a random value replacement process by replacing parts of pixels of the data representation with a random value, (iv) a random shuffling process by shuffling position information of the data representation, and (v) a resizing process by resizing a cardinal number of pixels in the data representation to be smaller than a cardinal number of pixels in the training data, through the information reduction module.

As one example, the learning device instructs the obfuscation network to (i) perform the resizing process to thereby change a size of the data representation arbitrarily and thus generate an arbitrarily-resized data representation and (ii) in response to detecting that a size of the arbitrarily-resized data representation is bigger than a size of the training data, perform the noise addition process to thereby reduce information included in the arbitrarily-resized data representation, through the information reduction module.

As one example, the encoding network and the task learning network are sub-networks included in a deep neural network capable of performing the task by performing the learning operation on the training data, wherein the encoding network includes earlier layers of the deep neural network, and wherein the task learning network includes remaining layers of the deep neural network.

As one example, at the step of (b), the learning device inputs the anonymized data representation into a proxy adversarial network, to thereby instruct the proxy adversarial network to (i) perform the adversarial task by using the anonymized data representation and thus output an adversarial result in which the privacy-related information of a privacy-related region is estimated from the anonymized data representation, (ii) generate an adversarial loss by referring to the adversarial result and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

In accordance with another aspect of the present disclosure, there is provided a testing method for testing an obfuscation network capable of obfuscating an original data for privacy, including steps of: (a) on condition that a learning device has performed processes of (I) inputting a training data into the obfuscation network, to thereby instruct the obfuscation network to (i) extract features for training to be used for performing a task of a task learning network and thus generate a data representation for training including the extracted features for training by performing a learning operation on the training data and (ii) transform the data representation for training and thus generate an anonymized data representation for training as an obfuscated data in which privacy-related information for training of the training data is protected and task utility is preserved; and (II) inputting the anonymized data representation for training into the task learning network, to thereby instruct the task learning network to (i) perform the task by using the anonymized data representation for training and thus output a task result for training, (ii) generate a task loss by referring to the task result for training and its corresponding ground truth, (iii) train the task learning network through a first backpropagation of the task loss such that the task loss is minimized, and (iv) train the obfuscation network through a second backpropagation of the task loss such that the task loss is minimized, a testing device acquiring a test data; and (b) the testing device inputting the test data into the obfuscation network, to thereby instruct the obfuscation network to (i) extract features for testing to be used for performing the task of the task learning network and thus generate a data representation for testing by performing the learning operation on the testing data and (ii) transform the data representation for testing and thus generate an anonymized data representation for testing as an obfuscated data in which privacy-related information for testing of the testing data is protected and task utility is preserved.

As one example, the testing method further includes a step of: (c) the testing device transmitting the anonymized data representation for testing to a server in which the task learning network is installed, to thereby instruct the server to acquire a task result for testing, wherein the task learning network performs the task by using the anonymized data representation for testing and thus generates the task result for testing.

As one example, at the step of (b), the testing device inputs the test data into the obfuscation network, to thereby instruct the obfuscation network to (i) generate the data representation for testing by encoding the testing data through an encoding network, and (ii) generate the anonymized data representation for testing by reducing the features included in the data representation for testing through an information reduction module.

As one example, the testing device instructs the obfuscation network to perform at least one of (i) a frequency filtering process by passing at least one preset frequency band or rejecting the preset frequency band of the data representation for testing, (ii) a noise addition process by adding noise to the data representation for testing, (iii) a random value replacement process by replacing parts of pixels of the data representation for testing with a random value, (iv) a random shuffling process by shuffling position information of the data representation for testing, and (v) a resizing process by resizing a cardinal number of pixels in the data representation for testing to be smaller than a cardinal number of pixels in the testing data, through the information reduction module.

As one example, the testing device instructs the obfuscation network to (i) perform the resizing process to thereby change a size of the data representation for testing arbitrarily and thus generate an arbitrarily-resized data representation for testing and (ii) in response to detecting that a size of the arbitrarily-resized data representation for testing is bigger than a size of the testing data, perform the noise addition process to thereby reduce information included in the arbitrarily-resized data representation for testing, through the information reduction module.

As one example, the encoding network and the task learning network are sub-networks included in a deep neural network capable of performing the task by performing the learning operation on the testing data, wherein the encoding network includes earlier layers of the deep neural network, and wherein the task learning network includes remaining layers of the deep neural network.

As one example, at the step of (a), the learning device has inputted the anonymized data representation for training into a proxy adversarial network, to thereby instruct the proxy adversarial network to (i) perform the adversarial task by using the anonymized data representation for training and thus output an adversarial result for training in which the privacy-related information for training of a privacy-related region for training is estimated from the anonymized data representation for training, (ii) generate an adversarial loss by referring to the adversarial result for training and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

In accordance with still another aspect of the present disclosure, there is provided a learning device for training an obfuscation network capable of obfuscating an original data for privacy, including: at least one memory that stores instructions; and at least one processor configured to execute the instructions to perform processes of (I) inputting a training data into the obfuscation network, to thereby instruct the obfuscation network to (i) extract features to be used for performing a task of a task learning network and thus generate a data representation including the extracted features by performing a learning operation on the training data and (ii) transform the data representation and thus generate an anonymized data representation as an obfuscated data in which privacy-related information of the training data is protected and task utility is preserved; and (II) inputting the anonymized data representation into the task learning network, to thereby instruct the task learning network to (i) perform the task by using the anonymized data representation and thus output a task result, (ii) generate a task loss by referring to the task result and its corresponding ground truth, (iii) train the task learning network through a first backpropagation of the task loss such that the task loss is minimized, and (iv) train the obfuscation network through a second backpropagation of the task loss such that the task loss is minimized.

As one example, at the process of (I), the processor inputs the training data into the obfuscation network, to thereby instruct the obfuscation network to (i) generate the data representation by encoding the training data through an encoding network, and (ii) generate the anonymized data representation by reducing the features included in the data representation through an information reduction module.

As one example, the processor instructs the obfuscation network to perform at least one of (i) a frequency filtering process by passing at least one preset frequency band or rejecting the preset frequency band of the data representation, (ii) a noise addition process by adding noise to the data representation, (iii) a random value replacement process by replacing parts of pixels of the data representation with a random value, (iv) a random shuffling process by shuffling position information of the data representation, and (v) a resizing process by resizing a cardinal number of pixels in the data representation to be smaller than a cardinal number of pixels in the training data, through the information reduction module.

As one example, the processor instructs the obfuscation network to (i) perform the resizing process to thereby change a size of the data representation arbitrarily and thus generate an arbitrarily-resized data representation and (ii) in response to detecting that a size of the arbitrarily-resized data representation is bigger than a size of the training data, perform the noise addition process to thereby reduce information included in the arbitrarily-resized data representation, through the information reduction module.

As one example, the encoding network and the task learning network are sub-networks included in a deep neural network capable of performing the task by performing the learning operation on the training data, wherein the encoding network includes earlier layers of the deep neural network, and wherein the task learning network includes remaining layers of the deep neural network.

As one example, at the process of (II), the processor inputs the anonymized data representation into a proxy adversarial network, to thereby instruct the proxy adversarial network to (i) perform the adversarial task by using the anonymized data representation and thus output an adversarial result in which the privacy-related information of a privacy-related region is estimated from the anonymized data representation, (ii) generate an adversarial loss by referring to the adversarial result and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

In accordance with still yet another aspect of the present disclosure, there is provided a testing device for testing an obfuscation network capable of obfuscating an original data for privacy, including: at least one memory that stores instructions; and at least one processor configured to execute the instructions to perform processes of: (I) on condition that a learning device has performed processes of inputting a training data into the obfuscation network, to thereby instruct the obfuscation network to (i) extract features for training to be used for performing a task of a task learning network and thus generate a data representation for training including the extracted features for training by performing a learning operation on the training data and (ii) transform the data representation for training and thus generate an anonymized data representation for training as an obfuscated data in which privacy-related information for training of the training data is protected and task utility is preserved; and inputting the anonymized data representation for training into the task learning network, to thereby instruct the task learning network to (i) perform the task by using the anonymized data representation for training and thus output a task result for training, (ii) generate a task loss by referring to the task result for training and its corresponding ground truth, (iii) train the task learning network through a first backpropagation of the task loss such that the task loss is minimized, and (iv) train the obfuscation network through a second backpropagation of the task loss such that the task loss is minimized, acquiring a test data; and (II) inputting the test data into the obfuscation network, to thereby instruct the obfuscation network to (i) extract features for testing to be used for performing the task of the task learning network and thus generate a data representation for testing by performing the learning operation on the testing data and (ii) transform the data representation for testing and thus generate an anonymized data representation for testing as an obfuscated data in which privacy-related information for testing of the testing data is protected and task utility is preserved.

As one example, the processor further performs a process of: (III) transmitting the anonymized data representation for testing to a server in which the task learning network is installed, to thereby instruct the server to acquire a task result for testing, wherein the task learning network performs the task by using the anonymized data representation for testing and thus generates the task result for testing.

As one example, at the process of (II), the processor inputs the test data into the obfuscation network, to thereby instruct the obfuscation network to (i) generate the data representation for testing by encoding the testing data through an encoding network, and (ii) generate the anonymized data representation for testing by reducing the features included in the data representation for testing through an information reduction module.

As one example, the processor instructs the obfuscation network to perform at least one of (i) a frequency filtering process by passing at least one preset frequency band or rejecting the preset frequency band of the data representation for testing, (ii) a noise addition process by adding noise to the data representation for testing, (iii) a random value replacement process by replacing parts of pixels of the data representation for testing with a random value, (iv) a random shuffling process by shuffling position information of the data representation for testing, and (v) a resizing process by resizing a cardinal number of pixels in the data representation for testing to be smaller than a cardinal number of pixels in the testing data, through the information reduction module.

As one example, the processor instructs the obfuscation network to (i) perform the resizing process to thereby change a size of the data representation for testing arbitrarily and thus generate an arbitrarily-resized data representation for testing and (ii) in response to detecting that a size of the arbitrarily-resized data representation for testing is bigger than a size of the testing data, perform the noise addition process to thereby reduce information included in the arbitrarily-resized data representation for testing, through the information reduction module.

As one example, the encoding network and the task learning network are sub-networks included in a deep neural network capable of performing the task by performing the learning operation on the testing data, wherein the encoding network includes earlier layers of the deep neural network, and wherein the task learning network includes remaining layers of the deep neural network.

As one example, at the process of (I), the learning device has inputted the anonymized data representation for training into a proxy adversarial network, to thereby instruct the proxy adversarial network to (i) perform the adversarial task by using the anonymized data representation for training and thus output an adversarial result for training in which the privacy-related information for training of a privacy-related region for training is estimated from the anonymized data representation for training, (ii) generate an adversarial loss by referring to the adversarial result for training and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

In addition, recordable media that are readable by a computer for storing a computer program to execute the method of the present disclosure is further provided.

The following drawings to be used for explaining example embodiments of the present disclosure are only part of example embodiments of the present disclosure and other drawings can be acquired based on the drawings by those skilled in the art of the present disclosure without inventive work.

Fig. 1 is a drawing schematically illustrating a learning device for training an obfuscation network capable of obfuscating, e.g., anonymizing or concealing, an original data in accordance with one example embodiment of the present disclosure.

Fig. 2 is a drawing schematically illustrating a learning method for training the obfuscation network capable of obfuscating the original data in accordance with one example embodiment of the present disclosure.

Fig. 3 is a drawing schematically illustrating the learning method for training the obfuscation network capable of obfuscating the original data in accordance with another example embodiment of the present disclosure.

Fig. 4 is a drawing schematically illustrating a testing device for testing the obfuscation network capable of obfuscating the original data in accordance with one example embodiment of the present disclosure.

Fig. 5 is a drawing schematically illustrating a testing method for testing the obfuscation network capable of obfuscating the original data in accordance with one example embodiment of the present disclosure.

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

To allow those skilled in the art to carry out the present disclosure easily, the example embodiments of the present disclosure will be explained in detail as shown below by referring to attached drawings.

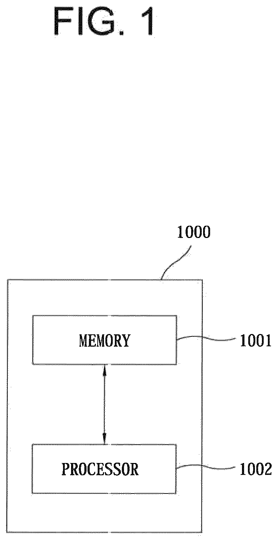

Fig. 1 is a drawing schematically illustrating a learning device for training an obfuscation network capable of obfuscating, e.g., anonymizing or concealing, an original data in accordance with one example embodiment of the present disclosure.

Referring to Fig. 1, the learning device 1000 may include a memory 1001 for storing instructions to be used in training the obfuscation network capable of obfuscating the original data for privacy and a processor 1002 for performing processes in training the obfuscation network capable of obfuscating the original data for privacy according to the instructions stored in the memory 1001 in accordance with one example embodiment of the present disclosure.

Specifically, the learning device 1000 may typically achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific manner as the computer software.

Also, the processors of such devices may include hardware configuration of MPU (Micro Processing Unit) or CPU (Central Processing Unit), cache memory, data bus, etc. Additionally, the computing device may further include operating system (OS) and software configuration of applications that achieve specific purposes.

Such description of the computing device does not exclude an integrated device including any combination of a processor, a memory, a medium, or any other computing components for implementing the present disclosure.

Meanwhile, on condition that at least one training data, e.g., at least one training image, is acquired, the processor 1002 of the learning device 1000 may (i) input the training data into the obfuscation network, to thereby instruct the obfuscation network to (i-1) extract features to be used for performing a task of a task learning network and thus generate a data representation including the extracted features by performing a learning operation on the training data and (i-2) transform the data representation and thus generate an anonymized data representation as an obfuscated data in which privacy-related information of the training data is protected and task utility is preserved and (ii) input the anonymized data representation into the task learning network, to thereby instruct the task learning network to (ii-1) perform the task by using the anonymized data representation and thus output a task result, (ii-2) generate a task loss by referring to the task result and its corresponding ground truth, (ii-3) train the task learning network through a first backpropagation of the task loss such that the task loss is minimized, and (ii-4) train the obfuscation network through a second backpropagation of the task loss such that the task loss is minimized.

Herein, the task utility may be any measurements that can represent how effective a given task is performed. For reference, the meaning of the task utility is well-known to those skilled in the art and thus the detailed explanation thereon is omitted.

Further, the learning device 1000 may input the anonymized data representation into a proxy adversarial network, to thereby instruct the proxy adversarial network to (i) perform an adversarial task by using the anonymized data representation and thus output an adversarial result in which the privacy-related information of a privacy-related region is estimated from the anonymized data representation, (ii) generate an adversarial loss by referring to the adversarial result and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

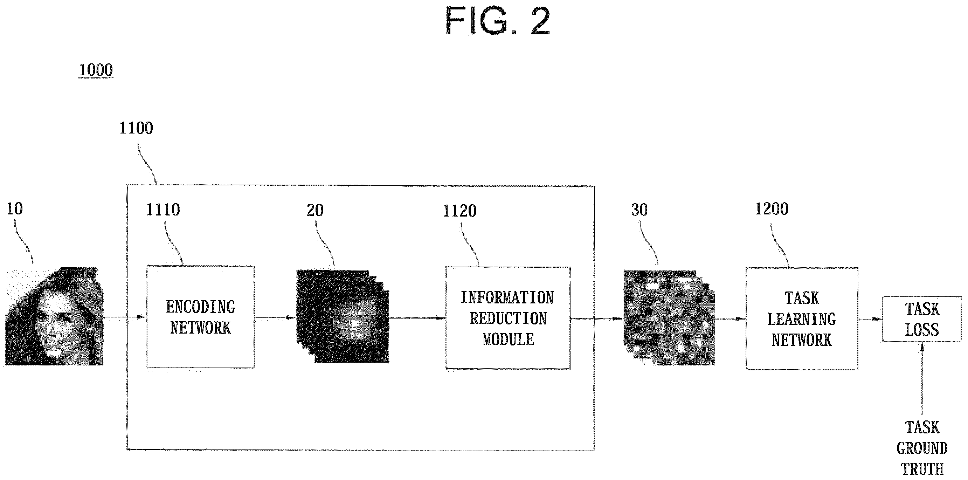

A method for training the obfuscation network capable of obfuscating, e.g., anonymizing or concealing, the original data for privacy by using the learning device 1000 in accordance with one example embodiment of the present disclosure is described by referring to Figs. 2 as follows.

First, if the training data 10 is acquired, the learning device 1000 may input the training data 10 into the obfuscation network 1100, to thereby instruct the obfuscation network 1100 to (i) extract the features to be used for performing the task of the task learning network and thus generate the data representation 20 including the extracted features by performing the learning operation on the training data 10 and (ii) transform the data representation 20 and thus generate an anonymized data representation 30 as the obfuscated data.

Herein, the learning device 1000 may input the training data 10 into the obfuscation network 1100, to thereby instruct the obfuscation network 1100 to (i) generate the data representation 20 by encoding the training data 10 through an encoding network 1110, and (ii) generate the anonymized data representation 30 by reducing the features included in the data representation 20 through an information reduction module.

For example, the learning device 1000 may input a training image as the training data 10 into the obfuscation network 1100, to thereby instruct the obfuscation network 1100 to (i) generate a feature map as the data representation 20 by performing the learning operation on the training image and (ii) transform the feature map and thus generate an anonymized feature map as the anonymized data representation 30. That is, the learning device 1000 may instruct the encoding network 1110 of the obfuscation network 1100 to encode the training image and thus generate the feature map in which feature values as measurements for recognizing the training image are included and may input the feature map into the information reduction module 1120 of the obfuscation network 1100, to thereby instruct the information reduction module 1120 to transform the feature map and thus generate the anonymized feature map.

Meanwhile, the encoding network 1110 may be a deep neural network capable of performing the task by performing the learning operation on the training data 10 or may be parts of front-end layers of the deep neural network. Further, the task learning network 1200 may be the deep neural network capable of performing the task by performing learning operation on the training data 10 or may be parts of rear-end layers of the deep neural network. Specifically, the encoding network 1110 and the task learning network 1200 may be sub-networks included in the deep neural network capable of performing the task by performing the learning operation on the training data 10. Herein, the encoding network includes earlier layers of the deep neural network, and the task learning network includes remaining layers of the deep neural network.

For example, the encoding network 1110 may be configured as a convolutional neural network like U-Net or earlier layers of U-Net developed for biomedical image segmentation by the Department of Computer Science of the University of Freiburg, ResNet or earlier layers of ResNet which is Deep Residual Learning for Image Recognition developed by Microsoft, AlexNet or earlier layers of AlexNet which won the 2012 ILSVRC (ImageNet Large Scale Visual Recognition Challenge) competition, MobileNetV2 or earlier layers of MobileNetV2 developed by Google, etc. Further, the task learning network 1200 may be configured as ResNet or latter layers of ResNet, AlexNet or latter layers of AlexNet, or MobileNetV2 or latter layers of MobileNetV2, etc.

Furthermore, the task performed by the task learning network 1200 may include various tasks that may be performed by deep learning methods, such as a classification task, a regression task, and a segmentation task, etc.

Furthermore, the information reduction module 1120 may generate the anonymized data representation 30 by reducing the features included in the data representation 20 through the information reduction module 1120.

Herein, the information reduction module 1120 may perform at least one of (i) a frequency filtering process by passing at least one preset frequency band or rejecting the preset frequency band of the data representation 20, (ii) a noise addition process by adding noise to the data representation 20, (iii) a random value replacement process by replacing parts of pixels of the data representation 20 with a random value, (iv) a random shuffling process by shuffling position information of the data representation 20, and (v) a resizing process by resizing a cardinal number of pixels in the data representation 20 to be smaller than a cardinal number of pixels in the training data 10. As a result, the information reduction module 1120 may generate the anonymized data representation.

As an example, for the training image with size 178x178x3 as its height, width, and channel, the encoding network 1110 configured as earlier five layers of ResNet18 may perform convolutional operations on the training image to generate the feature map with size 45x45x64 and then transform the feature map into the anonymized feature map with size 45x45x60 through the information reduction module 1120. Herein, although total pixels 121,500 of the anonymized feature map with the size 45x45x60 is more than the total pixels 95,052 of the training image with size 178x178x3, a lot of information may have been reduced through the information reduction module 1120.

As another example, for the training image with size 178x178x3 as its height, width, and channel, the encoding network 1110 configured as U-Net may perform the convolutional operations and deconvolutional operations on the training image to generate the feature map with size 178x178x3 and then transform the feature map into the anonymized feature map with size 178x178x3 through the information reduction module 1120. Herein, although the total pixels of the anonymized feature map and the total pixels of the training image are the same, a lot of information may have been reduced through the information reduction module 1120.

Meanwhile, the learning device 1000 may instruct the obfuscation network 1100 to (i) perform the resizing process to thereby change a size of the data representation 20 arbitrarily and thus generate an arbitrarily-resized data representation and (ii) in response to detecting that a size of the arbitrarily-resized data representation is greater than a size of the training data 10, perform the noise addition process to thereby reduce information included in the arbitrarily-resized data representation, through the information reduction module 1120. Herein, the noise addition process through the information reduction module 1120 may or may not be performed if the size of the arbitrarily-resized data representation is less than the size of the training image. That is, the obfuscation network 1100 may perform the learning operation on the training image to generate the arbitrarily-resized data representation and transform the arbitrarily-resized data into the anonymized data representation such that the number of total pixels of the anonymized data representation is less than those of the training image or such that even if the resultant number of the total pixels of the anonymized data representation is greater than those of the training image, information included in the anonymized data representation is reduced.

Next, the learning device 1000 may input the anonymized data representation 30 into the task learning network 1200, to thereby instruct the task learning network 1200 to perform the task by using the anonymized data representation 30 and thus output the task result.

Herein, the task result may be characteristic information generated by performing the learning operation on the anonymized data representation 30, or a task-specific output generated by using the characteristic information.

And, the characteristic information may be features or logits corresponding to the anonymized data representation 30. Also, the characteristic information may be feature values related to certain features in the anonymized data representation 30, or the logits including values of at least one of vectors, matrices, and coordinates related to the certain features. For example, if the training data 10 is facial image data, the result above may be classes for face recognition, facial features, e.g., laughing expressions, coordinates of facial landmark points, e.g., both end points on far sides of an eye.

Meanwhile, the task-specific output may have various results according to the task of the task learning network 1200, such as a probability of a class for classification, coordinates resulting from regression for location detection, etc. Further, an activation function of an activation unit may be applied to the characteristic information, to thereby generate the task-specific output. Herein, the activation function may include a sigmoid function, a linear function, a softmax function, an rlinear function, a square function, a sqrt function, an srlinear function, an abs function, a tanh function, a brlinear function, etc. but the scope of the present disclosure is not limited thereto.

As an example, when the task learning network 1200 performs the task for the classification, it may map the characteristic information onto each of classes, to thereby generate one or more probabilities of the anonymized data representation 30 for each of the classes. Herein, each of the probabilities for each of the classes may represent each of probabilities of the characteristic information for each of the classes being true. For example, if the training data is the facial image data, a probability of the face having a laughing expression may be outputted as 0.75, and a probability of the face not having the laughing expression may be outputted as 0.25, and the like. Herein, a softmax algorithm may be used for mapping the characteristic information onto each of the classes, but the scope of the present disclosure is not limited thereto, and various algorithms may be used for mapping the characteristic information onto each of the classes.

Meanwhile, in case the feature map is generated by performing the convolutional operations on the training image with the size 178x178x3 through the encoding network 1110 configured as the earlier five layers of ResNet18 in the obfuscation network 1100 and then the anonymized feature map with the size 45x45x60 is generated by transforming the feature map, the task learning network 1200 may be configured as the remaining layers of ResNet18 after the earlier five layers and may generate the task result by performing the learning operation on the anonymized feature map with the size 45x45x60.

Additionally, in case the feature map is generated by performing the convolutional operations and the deconvolutional operations on the training image with the size 178x178x3 through the encoding network 1110 configured as U-Net of the obfuscation network 1100 and then the anonymized feature map with size 178x178x3 is generated by transforming the feature map, the task learning network 1200 may be configured as ResNet18 and may generate the task result by performing the learning operation on the anonymized feature map with the size 178x178x3.

Next, the learning device 1000 may (i) generate a task loss by referring to the task result and its corresponding ground truth, (ii) train the task learning network 1200 through a first backpropagation of the task loss such that the task loss is minimized, and (iv) train the obfuscation network 1100 through a second backpropagation of the task loss such that the task loss is minimized.

The method of training the obfuscation network 1100 using one task learning network 1200 designed to perform a specific task is described above, however, contrary to above, it is also possible to train the obfuscation network 1100 using multiple task learning networks 1200 that are designed to perform different tasks.

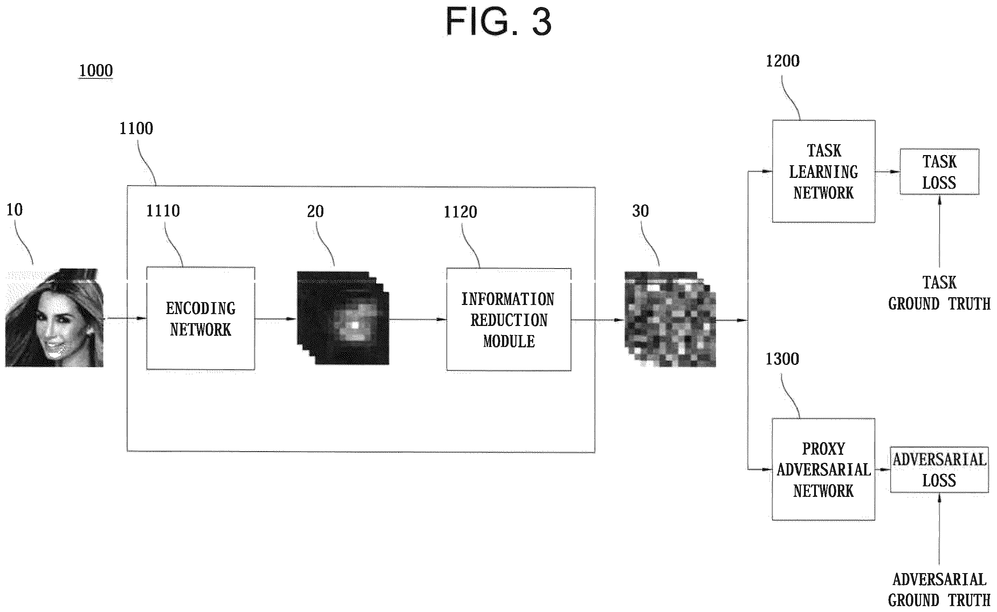

Next, by referring to Fig. 3, another method for training the obfuscation network 1100 in accordance with another embodiment of the present disclosure will be explained as below.

Fig. 3 schematically illustrates a method for training the obfuscation network by adding an additional proxy adversarial network to the configuration of Fig. 2. Herein the proxy adversarial network may be able to (i) breach the privacy-related information by acquiring sensitive attributes related to the privacy-related information from the anonymized data representation or (ii) reconstruct the training image by using the anonymized data representation. The detailed explanations that can be easily inferred from the description with reference to Fig. 2 will be omitted.

First, if the training data 10 is acquired, the learning device 1000 may input the training data 10 into the obfuscation network 1100, to thereby instruct the obfuscation network 1100 to (i) extract the features to be used for performing the task of the task learning network 1200 and thus generate the data representation 20 including the extracted features by performing the learning operation on the training data 10 and (ii) transform the data representation 20 and thus generate the anonymized data representation 30 as the obfuscated data.

Next, the learning device 1000 may input the anonymized data representation 30 into the task learning network 1200, to thereby instruct the task learning network 1200 to perform the task by using the anonymized data representation 30 and thus generate the task result.

Additionally, the learning device 1000 may input the anonymized data representation 30 into the proxy adversarial network 1300, to thereby instruct the proxy adversarial network 1300 to perform the adversarial task by using the anonymized data representation 30 and thus output the adversarial result in which the privacy-related information of the privacy-related region is estimated from the anonymized data representation 30.

Herein, the adversarial task may be a task for detecting the privacy-related information by extracting private attributes from the anonymized data representation 30 or a task for reconstructing the training image by using the anonymized data representation. For example, the adversarial task may be an adversarial attack aiming to detect a gender, an emotional state, a race, etc., of an image or to reconstruct the privacy-related information within the image.

Meanwhile, the proxy adversarial network 1300 may be the deep neural network capable of performing the adversarial task by performing learning operation on the training data 10 or may be parts of rear-end layers of the deep neural network.

For example, the proxy adversarial network 1300 may be configured as U-Net or latter layers of U-Net, ResNet or latter layers of ResNet, AlexNet or latter layers of AlexNet, or MobileNetV2 or latter layers of MobileNetV2, etc.

As an example, in case the feature map is generated by performing the convolutional operations on the training image with the size 178x178x3 through the encoding network 1110 configured as the earlier five layers ResNet18 in obfuscation network 1100 and then the anonymized feature map with the size 45x45x60 is generated by transforming the feature map, the proxy adversarial network 1300 may be configured as the remaining layers of ResNet18 after the earlier five layers and may generate the task result by performing the adversarial task on the anonymized feature map with the size 45x45x60.

Additionally, in case the feature map is generated by performing the convolutional operations and the deconvolutional operations on the training image with the size 178x178x3 through the encoding network 1110 configured as U-Net in the obfuscation network 1100 and then the anonymized feature map with the size 178x178x3 is generated by transforming the feature map, the proxy adversarial network 1300 may be configured as U-Net and may generate the adversarial result by performing an adversarial operation on the anonymized feature map with the size 178x178x3.

Next, the learning device 1000 may (i) generate an adversarial loss by referring to the adversarial result and its corresponding ground truth, (ii) train the proxy adversarial network 1300 through a third backpropagation of the adversarial loss such that the adversarial loss is minimized, and (iii) train the obfuscation network 1100 through the second backpropagation of the task loss and the adversarial loss such that the task loss is minimized and such that the adversarial loss is maximized.

That is, the learning device 1000 may generate the task loss by referring to the task result of the task learning network 1200 and its corresponding task ground truth, and may generate the adversarial loss by referring to the adversarial result of the proxy adversarial network 1300 and its corresponding adversarial ground truth. Next, the learning device 1000 may (i) train the task learning network 1200 through the first backpropagation of the task loss such that the task loss is minimized, (ii) train the proxy adversarial network 1300 through the third backpropagation of the adversarial loss such that the adversarial loss is minimized, and (iii) train the obfuscation network 1100 through the second backpropagation of the task loss and the adversarial loss such that the task loss is minimized and such that the adversarial loss is maximized.

The method of training the obfuscation network 1100 additionally using the proxy adversarial network 1300 designed to perform the adversarial task is described above, however, contrary to above, it is also possible to train the obfuscation network 1100 using multiple additional proxy adversarial networks 1300 that are designed to perform different adversarial tasks.

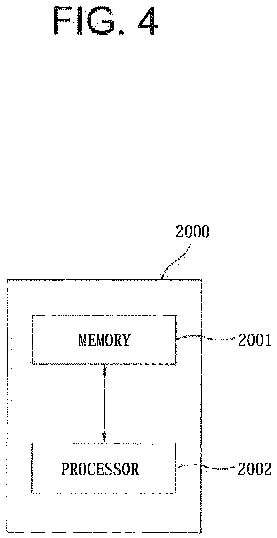

Next, Fig. 4 is a drawing schematically illustrating a testing device for testing the trained obfuscation network in accordance with one example embodiment of the present disclosure.

For reference, in the description below, the phrase "for training" is added for terms related to the learning processes, and the phrase "for testing" is added for terms related to testing processes, to avoid possible confusion.

Referring to Fig. 4, the testing device 2000 may include a memory 2001 for storing instructions to be used in testing the trained obfuscation network capable of obfuscating the original data for privacy and a processor 2002 for performing processes in testing the trained obfuscation network capable of obfuscating the original data for privacy according to the instructions stored in the memory 2001 in accordance with one example embodiment of the present disclosure.

Specifically, the testing device 2000 may typically achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

Also, the processors of such devices may include hardware configuration of MPU (Micro Processing Unit) or CPU (Central Processing Unit), cache memory, data bus, etc. Additionally, the computing device may further include operating system (OS) and software configuration of applications that achieve specific purposes.

Such description of the computing device does not exclude an integrated device including any combination of a processor, a memory, a medium, or any other computing components for implementing the present disclosure.

Meanwhile, the processor 2002 of the testing device 2000, (1) on condition that the learning device has performed processes of (I) inputting the training data into the obfuscation network, to thereby instruct the obfuscation network to (i) extract features for training to be used for performing the task of the task learning network and thus generate a data representation for training including the extracted features for training by performing the learning operation on the training data and (ii) transform the data representation for training and thus generate an anonymized data representation for training as the obfuscated data in which privacy-related information for training of the training data is protected and the task utility is preserved and (II) inputting the anonymized data representation for training into the task learning network, to thereby instruct the task learning network to (i) perform the task by using the anonymized data representation for training and thus output a task result for training, (ii) generate the task loss by referring to the task result for training and its corresponding ground truth, (iii) train the task learning network through the first backpropagation of the task loss such that the task loss is minimized, and (iv) train the obfuscation network through the second backpropagation of the task loss such that the task loss is minimized, may acquire at least one test data, and (2) according to the instructions stored in the memory 2001, may input the test data into the obfuscation network, to thereby instruct the obfuscation network to (i) extract features for testing to be used for performing the task of the task learning network and thus generate a data representation for testing by performing the learning operation on the testing data and (ii) transform the data representation for testing and thus generate an anonymized data representation for testing as an obfuscated data in which privacy-related information for testing of the testing data is protected and the task utility is preserved.

Herein, the learning device may have inputted the anonymized data representation for training into the proxy adversarial network, to thereby instruct the proxy adversarial network to (i) perform the adversarial task by using the anonymized data representation for training and thus output an adversarial result for training in which the privacy-related information for training of a privacy-related region for training is estimated from the anonymized data representation for training, (ii) generate an adversarial loss by referring to the adversarial result for training and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

Additionally, the testing device 2000 may transmit the anonymized data representation for testing to a server in which the task learning network is installed, to thereby instruct the server to acquire a task result for testing. Herein the task learning network may perform the task by using the anonymized data representation for testing and thus generates the task result for testing.

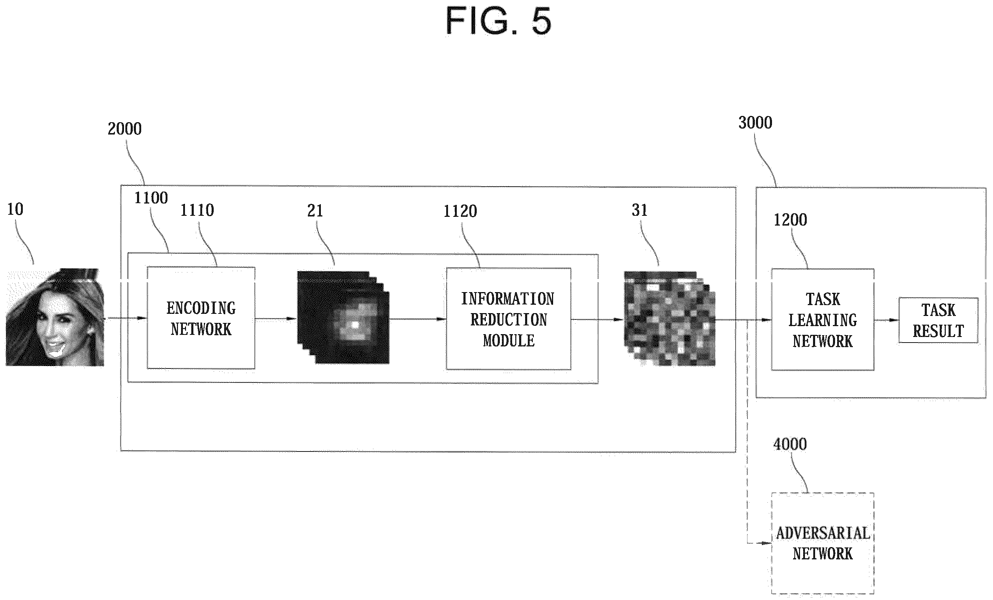

The testing device 2000 for testing the obfuscation network capable of obfuscating, e.g., anonymizing or concealing, the original data for privacy in accordance with one example embodiment of the present disclosure is described by referring to Fig. 5 as follows. In the description below, parts easily deducible regarding the learning method from Figs. 2 and 3 will be omitted.

Referring to Fig. 5, the testing device 2000 may acquire the test data 11 on condition that the obfuscation network capable of obfuscating the original data for privacy has been trained.

Herein, the obfuscation network may have been trained by using the learning method illustrated in Figs. 2 and 3.

That is, as illustrated in Fig. 2, the learning device has performed processes of (I) inputting the training data into the obfuscation network, to thereby instruct the obfuscation network to (i) extract the features for training to be used for performing the task of the task learning network and thus generate the data representation for training including the extracted features for training by performing the learning operation on the training data and (ii) transform the data representation for training and thus generate the anonymized data representation for training as the obfuscated data in which the privacy-related information for training of the training data is protected and the task utility is preserved and (II) inputting the anonymized data representation for training into the task learning network, to thereby instruct the task learning network to (i) perform the task by using the anonymized data representation for training and thus output the task result for training, (ii) generate the task loss by referring to the task result for training and its corresponding ground truth, (iii) train the task learning network through the first backpropagation of the task loss such that the task loss is minimized, and (iv) train the obfuscation network through the second backpropagation of the task loss such that the task loss is minimized.

Further, as illustrated in Fig. 3, the learning device may have inputted the anonymized data representation for training into the proxy adversarial network, to thereby instruct the proxy adversarial network to (i) perform the adversarial task by using the anonymized data representation for training and thus output the adversarial result for training in which the privacy-related information for training of the privacy-related region for training is estimated from the anonymized data representation for training, (ii) generate the adversarial loss by referring to the adversarial result for training and its corresponding ground truth, (iii) train the proxy adversarial network through the third backpropagation of the adversarial loss such that the adversarial loss is minimized, and (iv) train the obfuscation network through the second backpropagation of the task loss and the adversarial loss such that the task loss is minimized and such that the adversarial loss is maximized.

Next, the testing device 2000 may input the test data 11 into the obfuscation network 1100, to thereby instruct the obfuscation network 1100 to (i) extract the features for testing to be used for performing the task of the task learning network 1200 and thus generate the data representation for testing 21 by performing the learning operation on the testing data 11 and (ii) transform the data representation for testing 21 and thus generate the anonymized data representation for testing 31 as the obfuscated data in which the privacy-related information for testing of the testing data 21 is protected and the task utility is preserved.

Further, the testing device 2000 may transmit the anonymized data representation for testing 31 to the server 3000 in which the task learning network 1200 is installed, to thereby instruct the server 3000 to acquire the task result for testing, wherein the task learning network 1200 performs the task by using the anonymized data representation for testing and thus generates the task result for testing.

Meanwhile, the testing device 2000 may be an edge device such as a mobile device with limited computing resources. In this case, the trained obfuscation network 1100 may be installed on the mobile device and the trained task learning network 1200 may be installed on the server 3000.

For example, if the testing device 2000 is the mobile device, a user may use the mobile device to take photos or record videos. The frames of the photos and videos may be obfuscated through the obfuscation network 1100, to thereby generate the anonymized data representation 31 in which privacy-related information of the training data is protected and the task utility is preserved. Then, the anonymized data representation 31 may be transmitted to the server 3000, to thereby allow the server to perform the task through the task learning network 1200.

Herein, even if the anonymized data representation 31 transmitted from the mobile device is exposed to the adversarial network 4000, the adversarial network 4000 may not be able to extract the private attributes therefrom, thereby preventing the adversarial attack by the adversarial network 4000.

Meanwhile, comparisons between a performance of the obfuscation model according to one embodiment of the present disclosure and a performance of the conventional obfuscation models are as follows.

First, the applicant set up an experiment as follows.

### Datasets

The applicant conducted experiments on CelebA, FairFace, and CIFAR10. Following the utility and privacy task setting from DISCO, the applicant set "smiling" as the utility attribute and "male" as the privacy attribute for CelebA, "gender" as the utility attribute and "race" as the private attribute for FairFace. For CIFAR10, following the setting from MaxEnt, the utility task is defined as classifying living objects (e.g., "bird", "cat", etc.) or non-living objects (e.g., "airplane", "automobile", etc.) and privacy task as classifying separate 10 classes.

### Models

For the full task learning model F, the applicant used ResNet18. ResNet18 consists of one convolution layer, and 4 residual blocks each of which consists of four convolution layers and residual connection, and finally a fully connected layer. The applicant chose the splitting point to be right after each of the 4 residual blocks. The applicant indicated the different configurations as RN18{1, 2, 3, 4} respectively, where the subscript number indicates the block after which the network was split. For the task learning model and the proxy adversarial model the applicant used the remaining part of the split architecture, e.g., for RN184 the remaining part would consist of the fully connected layer. For the noise parameter, σ= 1920 was used for FairFace, and σ= 3840 was used for CelebA and CIFAR10. The parameter was chosen based on privacy-utility trade-off on given dataset and model. A separate Adam optimizer was used for all 3 models with learning rate 10-3, and λ= 10-2 was used for balancing the losses. The commonly used cross-entropy loss was used as the utility and information leakage attack loss. The applicant reported top-1 accuracy for the utility and privacy task, respectively.

### Attacks

For the information leakage attack, the applicant used a latter part of the split architecture. After the training of the obfuscator network was done, the adversarial network was trained also with Adam optimizer and the highest privacy accuracy was reported. The reconstruction attack was performed on CelebA dataset with a decoder from DeepObfs, which was also trained with Adam optimizer with learning rate 10-3. The reconstruction loss was computed between original image and reconstructed image with the MSE loss. The applicant depicted the qualitative results, but additionally provided quantitative comparison by reporting MSE, L2, SSIM, and PSNR.

The applicant compared the present invention with various baselines for the privacy-utility trade-off.

### ResNet18

To indicate the practical performance bounds, the applicant reported the utility and privacy performance for a ResNet18 model trained on the respective task.

### Image Noise

As a simple baseline image privacy remover, the applicant added Gaussian noise sampled from N(o, σ2) to the input image directly, while obeying the image range of pixels in the range (0, 1). That is to say, there are no model parameters to be trained for this model. For CelebA and FairFace σ= 2 was used and σ= 0.8 for CIFAR10. The σ was chosen based on the noise that fully obfuscates the image for the human eye. The applicant used the entire ResNet18 for both utility and privacy model.

### No Noise

To indicate the effectiveness of noise addition module (i.e., the noise adding process of the information restriction module) the applicant trained the split ResNet model without adding noise η to the intermediate representation. The applicant reported the performance for RN3 and RN4.

### MaxEnt

The applicant compare to MaxEnt ARL method which uses full ResNet18 as a client-side obfuscator, the last output of the obfuscator is a vector which has length d. d= 128 was used for CIFAR10, which is the setting used from the paper, and d=256 was used for FairFace and CelebA. The loss consists of task loss and adversarial loss, while the adversarial loss is based on the entropy of the prediction of the adversarial model.

### DISCO

The applicant reported the privacy-utility trade-off numbers as in the original work. The applicant reconfirmed the reconstruction vulnerability of DISCO as reported in their work with their parameters.

### DeepObfuscator

Since the authors of DeepObfuscator did not open-source their code, the applicant re-implemented DeepObfuscator to the best of the applicant's knowledge using the provided information in their paper.

The test results according to the method of the present invention and the conventional method according to these tests are as follows.

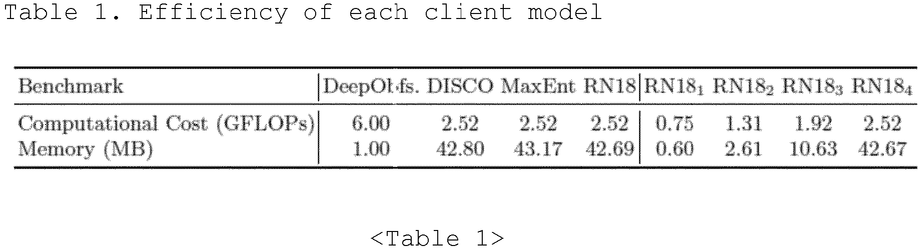

Table 1 shows a computational cost and a memory usage for each of the models, and images with the size 178x178x3 were used to measure the performance.

As shown in Table 1, all of present invention's variants have equal or lower computational costs than the others. It is also appreciated that the present invention requires smaller memory usage compared to the other modules, except for DeepObfs. However, it is noted that DeepObfs shows the largest computational cost.

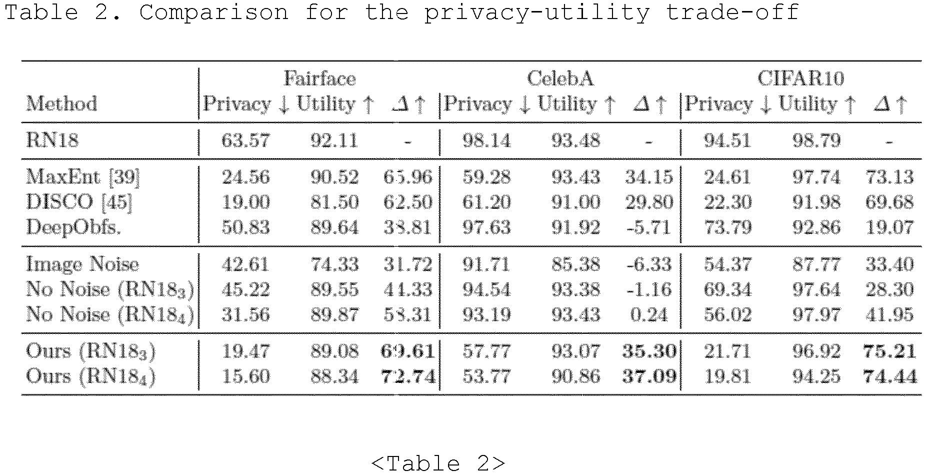

Table 2 shows a comparison between the present invention and existing ARL approaches focusing on the privacy-utility trade-off.

In terms of privacy-utility trade-off (Δ), the present invention outperforms all other methods while showing comparable utility accuracy with the performance bound. Comparison with 'No Noise' method shows the effectiveness of our noise addition module.

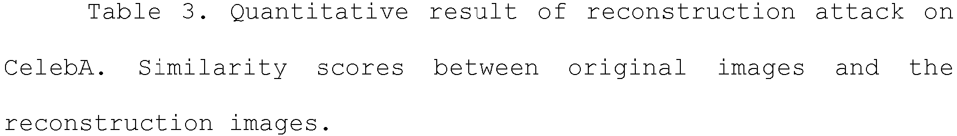

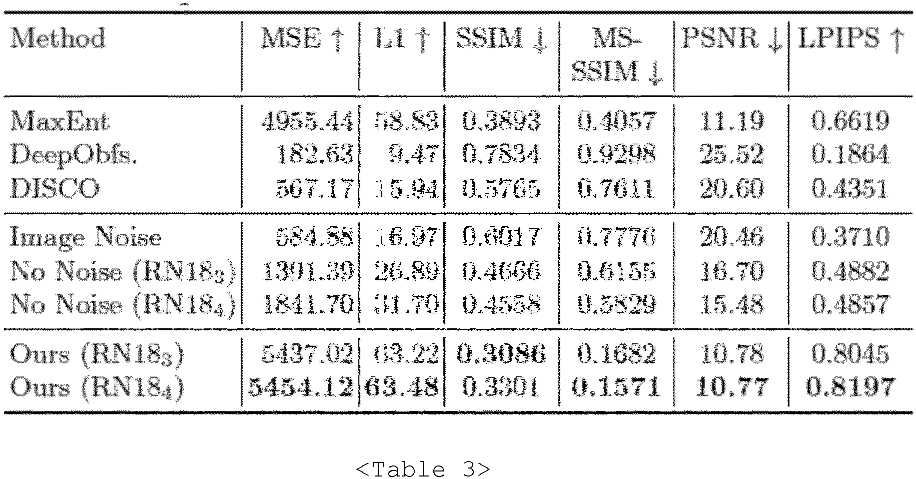

According to Table 3, the present invention showed the best robustness to the reconstruction attack in terms of both qualitative and quantitative result.

The present disclosure has an effect of providing the obfuscation network that is robust to attacks by adversarial actors while the task utility is preserved.

The present disclosure has another effect of providing the obfuscation network that minimizes the use of the computing resources in the edge device.

The present disclosure has still another effect of providing the obfuscation network that can easily be applied to an off-the-shelf deep neural network (DNN).

The present disclosure has still yet another effect of providing the obfuscation network that can easily be applied to a commonly used DNN.

The embodiments of the present disclosure as explained above can be implemented in a form of executable program command through a variety of computer means recordable in computer readable media. The computer readable media may include solely or in combination, program commands, data files, and data structures. The program commands recorded to the media may be components specially designed for the present disclosure or may be usable to a skilled human in a field of computer software. Computer readable media include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands may include not only a machine language code made by a complier but also a high-level code that can be used by an interpreter etc., which is executed by a computer. The aforementioned hardware device can work as more than a software module to perform the action of the present disclosure and they can do the same in the opposite case.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the scope of the disclosure as defined in the following claims.

## Claims

1. A computer-implemented testing method for testing an obfuscation network (1100) capable of obfuscating an original data for privacy, comprising steps of:
a) on condition that a learning device (1000) has performed processes of
(I) inputting a training image as training data (10) into the obfuscation network, to thereby instruct the obfuscation network to (i) extract features for training to be used for performing a classification task or a regression task or a segmentation task of a task learning network (1200) and thus generate a data representation (20) for training including the extracted features for training by performing a learning operation on the training data and (ii) transform the data representation for training and thus generate an anonymized data representation (30) for training as an obfuscated data in which privacy-related information for training of the training data is protected and task utility is preserved; and
(II) inputting the anonymized data representation for training into the task learning network, to thereby instruct the task learning network to (i) perform the task by using the anonymized data representation for training and thus output a task result for training, (ii) generate a task loss by referring to the task result for training and its corresponding ground truth, (iii) train the task learning network through a first backpropagation of the task loss such that the task loss is minimized, and (iv) train the obfuscation network through a second backpropagation of the task loss such that the task loss is minimized, a testing device (2000) acquiring a testing image as test data (11);
wherein, at the step of (a), the learning device inputs the training data into the obfuscation network, to thereby instruct the obfuscation network to (i) generate the data representation by encoding the training data by an encoding network (1110), and (ii) generate the anonymized data representation by reducing the features included in the data representation by an information reduction module (1120) by performing at least one of (i) a frequency filtering process by passing at least one preset frequency band or rejecting the preset frequency band of the data representation, (ii) a noise addition process by adding noise to the data representation, (iii) a random value replacement process by replacing parts of pixels of the data representation with a random value, (iv) a random shuffling process by shuffling position information of the data representation, and (v) a resizing process by resizing a cardinal number of pixels in the data representation to be smaller than a cardinal number of pixels in the training data, by the information reduction module, and
b) the testing device inputting the test data (11) into the obfuscation network, to thereby instruct the obfuscation network to (i) extract features for testing to be used for performing the task of the task learning network and thus generate a data representation for testing by performing the learning operation on the testing data and (ii) transform the data representation for testing and thus generate an anonymized data representation for testing as an obfuscated data in which privacy-related information for testing of the testing data is protected and task utility is preserved,
wherein, at the step of (b), the testing device inputs the test data into the obfuscation network, to thereby instruct the obfuscation network to (i) generate the data representation for testing by encoding the testing data by an encoding network (1110), and (ii) generate the anonymized data representation for testing by reducing the features included in the data representation for testing by an information reduction module (1120) by performing at least one of (i) a frequency filtering process by passing at least one preset frequency band or rejecting the preset frequency band of the data representation for testing, (ii) a noise addition process by adding noise to the data representation for testing, (iii) a random value replacement process by replacing parts of pixels of the data representation for testing with a random value, (iv) a random shuffling process by shuffling position information of the data representation for testing, and (v) a resizing process by resizing a cardinal number of pixels in the data representation for testing to be smaller than a cardinal number of pixels in the testing data, by the information reduction module, and
(c) the testing device transmitting the anonymized data representation for testing to a server (3000) in which the task learning network is installed, to thereby instruct the server to acquire a task result for testing, wherein the task learning network performs the task by using the anonymized data representation for testing and thus generates the task result for testing,
wherein the testing device is an edge device with limited computing resources comprising the obfuscation network.

2. The testing method of Claim 1, wherein the testing device instructs the obfuscation network to (i) perform the resizing process to thereby change a size of the data representation for testing arbitrarily and thus generate an arbitrarily-resized data representation for testing and (ii) in response to detecting that a size of the arbitrarily-resized data representation for testing is bigger than a size of the testing data, perform the noise addition process to thereby reduce information included in the arbitrarily-resized data representation for testing, by the information reduction module.

3. The testing method of Claim 1, wherein the encoding network and the task learning network are sub-networks included in a deep neural network capable of performing the task by performing the learning operation on the testing data, wherein the encoding network includes earlier layers of the deep neural network, and wherein the task learning network includes remaining layers of the deep neural network.

4. The testing method of Claim 1, wherein, at the step of (a), the learning device has inputted the anonymized data representation for training into a proxy adversarial network (1300), to thereby instruct the proxy adversarial network to (i) perform the adversarial task by using the anonymized data representation for training and thus output an adversarial result for training in which the privacy-related information for training of a privacy-related region for training is estimated from the anonymized data representation for training, (ii) generate an adversarial loss by referring to the adversarial result for training and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

5. A computer-implemented learning method for training an obfuscation network (1100) capable of obfuscating an original data on an edge device with limited computing resources for privacy, comprising steps of:
(a) a learning device (1000) inputting a training image as training data (10) into the obfuscation network, to thereby instruct the obfuscation network to (i) extract features to be used for performing a classification task or a regression task or a segmentation task of a task learning network (1200) and thus generate a data representation (20) including the extracted features by performing a learning operation on the training data and (ii) transform the data representation and thus generate an anonymized data representation (30) as an obfuscated data in which privacy-related information of the training data is protected and task utility is preserved; and
(b) the learning device inputting the anonymized data representation into the task learning network, to thereby instruct the task learning network to (i) perform the task by using the anonymized data representation and thus output a task result, (ii) generate a task loss by referring to the task result and its corresponding ground truth, (iii) train the task learning network through a first backpropagation of the task loss such that the task loss is minimized, and (iv) train the obfuscation network through a second backpropagation of the task loss such that the task loss is minimized,
wherein, at the step of (a), the learning device inputs the training data into the obfuscation network, to thereby instruct the obfuscation network to (i) generate the data representation by encoding the training data by an encoding network (1110), and (ii) generate the anonymized data representation by reducing the features included in the data representation by an information reduction module (1120) by performing at least one of (i) a frequency filtering process by passing at least one preset frequency band or rejecting the preset frequency band of the data representation, (ii) a noise addition process by adding noise to the data representation, (iii) a random value replacement process by replacing parts of pixels of the data representation with a random value, (iv) a random shuffling process by shuffling position information of the data representation, and (v) a resizing process by resizing a cardinal number of pixels in the data representation to be smaller than a cardinal number of pixels in the training data, by the information reduction module.

6. The computer-implemented learning method of Claim 5, wherein the learning device instructs the obfuscation network to (i) perform the resizing process to thereby change a size of the data representation arbitrarily and thus generate an arbitrarily-resized data representation and (ii) in response to detecting that a size of the arbitrarily-resized data representation is bigger than a size of the training data, perform the noise addition process to thereby reduce information included in the arbitrarily-resized data representation, by the information reduction module.

7. The computer-implemented learning method of Claim 5, wherein the encoding network and the task learning network are sub-networks included in a deep neural network capable of performing the task by performing the learning operation on the training data, wherein the encoding network includes earlier layers of the deep neural network, and wherein the task learning network includes remaining layers of the deep neural network.

8. The computer-implemented learning method of Claim 5, wherein, at the step of (b), the learning device inputs the anonymized data representation into a proxy adversarial network (1300), to thereby instruct the proxy adversarial network to (i) perform the adversarial task by using the anonymized data representation and thus output an adversarial result in which the privacy-related information of a privacy-related region is estimated from the anonymized data representation, (ii) generate an adversarial loss by referring to the adversarial result and its corresponding ground truth, (iii) train the proxy adversarial network through a third backpropagation of the adversarial loss such that the adversarial loss is minimized, and (iv) train the obfuscation network through the second backpropagation of the task loss and the adversarial loss such that the task loss is minimized and such that the adversarial loss is maximized.

9. A learning device (1000) for training an obfuscation network (1100) capable of obfuscating an original data on an edge device with limited computing resources for privacy, comprising:
at least one memory (1001) that stores instructions; and
at least one processor (1002) configured to execute the instructions to perform processes of (I) inputting a training image as training data (10) into the obfuscation network, to thereby instruct the obfuscation network to (i) extract features to be used for performing a classification task or a regression task or a segmentation task of a task learning network (1200) and thus generate a data representation (20) including the extracted features by performing a learning operation on the training data and (ii) transform the data representation and thus generate an anonymized data representation (30) as an obfuscated data in which privacy-related information of the training data is protected and task utility is preserved; and (II) inputting the anonymized data representation into the task learning network, to thereby instruct the task learning network to (i) perform the task by using the anonymized data representation and thus output a task result, (ii) generate a task loss by referring to the task result and its corresponding ground truth, (iii) train the task learning network through a first backpropagation of the task loss such that the task loss is minimized, and (iv) train the obfuscation network through a second backpropagation of the task loss such that the task loss is minimized,
wherein, at the process of (I), the processor is configured to input the training data into the obfuscation network, to thereby instruct the obfuscation network to (i) generate the data representation by encoding the training data by an encoding network, and (ii) generate the anonymized data representation by reducing the features included in the data representation by an information reduction module by performing at least one of (i) a frequency filtering process by passing at least one preset frequency band or rejecting the preset frequency band of the data representation, (ii) a noise addition process by adding noise to the data representation, (iii) a random value replacement process by replacing parts of pixels of the data representation with a random value, (iv) a random shuffling process by shuffling position information of the data representation, and (v) a resizing process by resizing a cardinal number of pixels in the data representation be smaller than a cardinal number of pixels in the training data, by the information reduction module.

## Patentansprüche

1. Computerimplementiertes Prüfverfahren zum Testen eines Obfuskationsnetzwerks (1100) mit Fähigkeit zur Obfuskation von Originaldaten für Datenschutz, umfassend folgende Schritte:
a) unter der Bedingung, dass eine Lernvorrichtung (1000) Prozesse ausgeführt hat des
(I) Eingebens eines Trainingsbilds als Trainingsdaten (10) in das Obfuskationsnetzwerk, um das Obfuskationsnetzwerk anzuweisen, (i) Merkmale für das Training zu extrahieren, die zum Durchführen einer Klassifikationsaufgabe oder einer Regressionsaufgabe oder einer Segmentierungsaufgabe eines Aufgabenlernnetzwerks (1200) verwendet werden, und dadurch eine Datenrepräsentation (20) für das Training zu erzeugen, die die extrahierten Merkmale für das Training umfasst, indem ein Lernvorgang an den Trainingsdaten ausgeführt wird; und (ii) die Datenrepräsentation für das Training zu transformieren und dadurch eine anonymisierte Datenrepräsentation (30) für das Training als obfuskierte Daten zu erzeugen, in denen datenschutzbezogene Informationen für das Training der Trainingsdaten geschützt und die Aufgabennützlichkeit beibehalten sind; und
(II) Eingebens der anonymisierten Datenrepräsentation für das Training in das Aufgabenlernnetzwerk, um das Aufgabenlernnetzwerk anzuweisen, (i) die Aufgabe unter Verwendung der anonymisierten Datenrepräsentation für das Training durchzuführen und dadurch ein Aufgaben-Ergebnis für das Training auszugeben, (ii) einen Aufgabenverlust zu erzeugen durch Bezugnahme auf das Aufgaben-Ergebnis für das Training und die diesem entsprechende Ground-Truth, (iii) das Aufgabenlernnetzwerk durch eine erste Rückpropagation des Aufgabenverlusts zu trainieren, so dass der Aufgabenverlust minimiert wird, und (iv) das Obfuskationsnetzwerk durch eine zweite Rückpropagation des Aufgabenverlusts zu trainieren, so dass der Aufgabenverlust minimiert wird, wobei eine Prüfvorrichtung (2000) ein Prüfungsbild als Testdaten (11) erwirbt;
wobei, in Schritt (a), die Lernvorrichtung die Trainingsdaten in das Obfuskationsnetzwerk eingibt, um das Obfuskationsnetzwerk anzuweisen, (i) die Datenrepräsentation zu erzeugen, indem die Trainingsdaten durch ein Kodierungsnetzwerk (1110) codiert werden; und (ii) die anonymisierte Datenrepräsentation zu erzeugen, indem die in der Datenrepräsentation enthaltenen Merkmale durch ein Informationsreduktionsmodul (1120) reduziert werden, indem mindestens einer ausgeführt wird von (i) einem Frequenzfilterungsprozess, bei dem mindestens ein voreingestelltes Frequenzband der Datenrepräsentation durchgelassen oder verworfen wird, (ii) einem Rauschadditionsprozess, bei dem der Datenrepräsentation Rauschen hinzugefügt wird, (iii) einem Zufallswert-Ersetzungsprozess, bei dem Teile von Pixeln der Datenrepräsentation durch einen Zufallswert ersetzt werden, (iv) einem Zufalls-Shuffle-Prozess, bei dem Positionsinformationen der Datenrepräsentation durchmischt werden, und (v) einem Größenänderungsprozess, bei dem eine Kardinalzahl von Pixeln in der Datenrepräsentation so verkleinert wird, dass sie kleiner ist als die Kardinalzahl von Pixeln in den Trainingsdaten, durch das Informationsreduktionsmodul; und
b) die Prüfvorrichtung die Testdaten (11) in das Obfuskationsnetzwerk eingibt, um das Obfuskationsnetzwerk anzuweisen, (i) Merkmale für den Test zu extrahieren, die zum Durchführen der Aufgabe des Aufgabenlernnetzwerks verwendet werden, und dadurch eine Datenrepräsentation für den Test zu erzeugen, indem der Lernvorgang an den Testdaten ausgeführt wird; und (ii) die Datenrepräsentation für den Test zu transformieren und dadurch eine anonymisierte Datenrepräsentation für den Test als obfuskierte Daten zu erzeugen, in denen datenschutzbezogene Informationen für den Test der Testdaten geschützt und die Aufgabennützlichkeit beibehalten sind;
wobei, in Schritt (b), die Prüfvorrichtung die Testdaten in das Obfuskationsnetzwerk eingibt, um das Obfuskationsnetzwerk anzuweisen, (i) die Datenrepräsentation für den Test zu erzeugen, indem die Testdaten durch das Kodierungsnetzwerk (1110) codiert werden; und (ii) die anonymisierte Datenrepräsentation für den Test zu erzeugen, indem die in der Datenrepräsentation für den Test enthaltenen Merkmale durch das Informationsreduktionsmodul (1120) reduziert werden, indem mindestens einer ausgeführt wird von (i) einem Frequenzfilterungsprozess, bei dem mindestens ein voreingestelltes Frequenzband der Datenrepräsentation für den Test durchgelassen oder verworfen wird, (ii) einem Rauschadditionsprozess, bei dem der Datenrepräsentation für den Test Rauschen hinzugefügt wird, (iii) einem Zufallswert-Ersetzungsprozess, bei dem Teile von Pixeln der Datenrepräsentation für den Test durch einen Zufallswert ersetzt werden, (iv) einem Zufalls-Shuttle-Prozess, bei dem Positionsinformationen der Datenrepräsentation für den Test durchmischt werden, und (v) einem Größenänderungsprozess, bei dem eine Kardinalzahl von Pixeln in der Datenrepräsentation für den Test so verkleinert wird, dass sie kleiner ist als die Kardinalzahl von Pixeln in den Testdaten, durch das Informationsreduktionsmodul; und
c) die Prüfvorrichtung die anonymisierte Datenrepräsentation für den Test an einen Server (3000) überträgt, in dem das Aufgabenlernnetzwerk installiert ist, um dadurch den Server anzuweisen, ein Aufgaben-Ergebnis für den Test zu ermitteln, wobei das Aufgabenlernnetzwerk die Aufgabe unter Verwendung der anonymisierten Datenrepräsentation für den Test ausführt und dadurch das Aufgaben-Ergebnis für den Test erzeugt,
wobei die Prüfvorrichtung ein Edge-Gerät mit begrenzten Rechenressourcen ist, das das Obfuskationsnetzwerk umfasst.

2. Prüfverfahren nach Anspruch 1, wobei die Prüfvorrichtung das Obfuskationsnetzwerk anweist, (i) den Größenänderungsprozess auszuführen, um dadurch eine Größe der Datenrepräsentation für den Test beliebig zu verändern und somit eine beliebig veränderte Datenrepräsentation für den Test zu erzeugen; und (ii) als Reaktion auf die Erkennung, dass eine Größe der beliebig veränderten Datenrepräsentation für den Test größer ist als eine Größe der Testdaten, den Rauschadditionsprozess auszuführen, um dadurch Information, die in der beliebig veränderten Datenrepräsentation für den Test enthalten ist, zu reduzieren, durch das Informationsreduktionsmodul.

3. Prüfverfahren nach Anspruch 1, wobei das Kodierungsnetzwerk und das Aufgabenlernnetzwerk Subnetzwerke eines tiefen neuronalen Netzwerks sind, das fähig ist, die Aufgabe durch Ausführen des Lernvorgangs an den Testdaten durchzuführen, wobei das Kodierungsnetzwerk frühere Schichten des tiefen neuronalen Netzwerks umfasst und das Aufgabenlernnetzwerk verbleibende Schichten des tiefen neuronalen Netzwerks umfasst.

4. Prüfverfahren nach Anspruch 1, wobei in Schritt (a) die Lernvorrichtung die anonymisierte Datenrepräsentation für das Training in ein Proxy-Adversarial-Netzwerk (1300) eingegeben hat, um dadurch das Proxy-Adversarial-Netzwerk anzuweisen, (i) die adversariale Aufgabe unter Verwendung der anonymisierten Datenrepräsentation für das Training auszuführen und dadurch ein adversariales Ergebnis für das Training auszugeben, in dem datenschutzbezogene Informationen einer datenschutzbezogenen Region für das Training aus der anonymisierten Datenrepräsentation für das Training geschätzt werden, (ii) einen adversarialen Verlust zu erzeugen durch Bezugnahme auf das adversariale Ergebnis für das Training und die diesem entsprechende Ground-Truth, (iii) das Proxy-Adversarial-Netzwerk durch eine dritte Rückpropagation des adversarialen Verlusts zu trainieren, so dass der adversariale Verlust minimiert wird, und (iv) das Obfuskationsnetzwerk durch die zweite Rückpropagation des Aufgabenverlusts und des adversarialen Verlusts zu trainieren, so dass der Aufgabenverlust minimiert und der adversariale Verlust maximiert wird.

5. Computerimplementiertes Lernverfahren zum Trainieren eines Obfuskationsnetzwerks (1100) mit Fähigkeit zur Obfuskation von Originaldaten auf einem Edge-Gerät mit begrenzten Rechenressourcen für Datenschutz, umfassend die folgenden Schritte:
(a) eine Lernvorrichtung (1000) gibt ein Trainingsbild als Trainingsdaten (10) in das Obfuskationsnetzwerk ein, um dadurch das Obfuskationsnetzwerk anzuweisen, (i) Merkmale zu extrahieren, die zum Durchführen einer Klassifikationsaufgabe oder einer Regressionsaufgabe oder einer Segmentierungsaufgabe eines Aufgabenlernnetzwerks (1200) verwendet werden, und dadurch eine Datenrepräsentation (20) zu erzeugen, die die extrahierten Merkmale umfasst, indem ein Lernvorgang an den Trainingsdaten ausgeführt wird; und (ii) die Datenrepräsentation zu transformieren und dadurch eine anonymisierte Datenrepräsentation (30) als obfuskierte Daten zu erzeugen, in denen datenschutzbezogene Informationen der Trainingsdaten geschützt und die Aufgabennützlichkeit beibehalten sind; und
(b) die Lernvorrichtung gibt die anonymisierte Datenrepräsentation in das Aufgabenlernnetzwerk ein, um dadurch das Aufgabenlernnetzwerk anzuweisen, (i) die Aufgabe unter Verwendung der anonymisierten Datenrepräsentation durchzuführen und dadurch ein Aufgaben-Ergebnis auszugeben, (ii) einen Aufgabenverlust zu erzeugen durch Bezugnahme auf das Aufgaben-Ergebnis und die diesem entsprechende Ground-Truth, (iii) das Aufgabenlernnetzwerk durch eine erste Rückpropagation des Aufgabenverlusts zu trainieren, so dass der Aufgabenverlust minimiert wird, und (iv) das Obfuskationsnetzwerk durch eine zweite Rückpropagation des Aufgabenverlusts zu trainieren, so dass der Aufgabenverlust minimiert wird,
wobei in Schritt (a) die Lernvorrichtung die Trainingsdaten in das Obfuskationsnetzwerk eingibt, um dadurch das Obfuskationsnetzwerk anzuweisen, (i) die Datenrepräsentation zu erzeugen, indem die Trainingsdaten durch ein Kodierungsnetzwerk (1110) kodiert werden; und (ii) die anonymisierte Datenrepräsentation zu erzeugen, indem die in der Datenrepräsentation enthaltenen Merkmale durch ein Informationsreduktionsmodul (1120) reduziert werden, indem mindestens einer ausgeführt wird von (i) einem Frequenzfilterungsprozess, bei dem mindestens ein voreingestelltes Frequenzband der Datenrepräsentation durchgelassen oder verworfen wird, (ii) einem Rauschadditionsprozess, bei dem der Datenrepräsentation Rauschen hinzugefügt wird, (iii) einem Zufallswert-Ersetzungsprozess, bei dem Teile von Pixeln der Datenrepräsentation durch einen Zufallswert ersetzt werden, (iv) einem Zufallsvertauschungsprozess, bei dem Positionsinformationen der Datenrepräsentation durchmischt werden, und (v) einem Größenänderungsprozess, bei dem eine Kardinalzahl von Pixeln in der Datenrepräsentation so verkleinert wird, dass sie kleiner ist als die Kardinalzahl von Pixeln in den Trainingsdaten, durch das Informationsreduktionsmodul.

6. Computerimplementiertes Lernverfahren nach Anspruch 5, wobei die Lernvorrichtung das Obfuskationsnetzwerk anweist, (i) den Größenänderungsprozess auszuführen, um dadurch eine Größe der Datenrepräsentation beliebig zu verändern und somit eine beliebig veränderte Datenrepräsentation zu erzeugen; und (ii) als Reaktion auf die Erkennung, dass eine Größe der beliebig veränderten Datenrepräsentation größer ist als eine Größe der Trainingsdaten, den Rauschadditionsprozess auszuführen, um dadurch Information, die in der beliebig veränderten Datenrepräsentation enthalten ist, zu reduzieren, durch das Informationsreduktionsmodul.

7. Computerimplementiertes Lernverfahren nach Anspruch 5, wobei das Kodierungsnetzwerk und das Aufgabenlernnetzwerk Subnetzwerke eines tiefen neuronalen Netzwerks sind, das fähig ist, die Aufgabe durch Ausführen des Lernvorgangs an den Trainingsdaten durchzuführen, wobei das Kodierungsnetzwerk frühere Schichten des tiefen neuronalen Netzwerks umfasst und das Aufgabenlernnetzwerk verbleibende Schichten des tiefen neuronalen Netzwerks umfasst.

8. Computerimplementiertes Lernverfahren nach Anspruch 5, wobei in Schritt (b) die Lernvorrichtung die anonymisierte Datenrepräsentation in ein Proxy-Adversarial-Netzwerk (1300) eingibt, um dadurch das Proxy-Adversarial-Netzwerk anzuweisen, (i) die adversariale Aufgabe unter Verwendung der anonymisierten Datenrepräsentation auszuführen und dadurch ein adversariales Ergebnis auszugeben, in dem datenschutzbezogene Informationen einer datenschutzbezogenen Region aus der anonymisierten Datenrepräsentation geschätzt werden, (ii) einen adversarialen Verlust zu erzeugen durch Bezugnahme auf das adversariale Ergebnis und die diesem entsprechende Ground-Truth, (iii) das Proxy-Adversarial-Netzwerk durch eine dritte Rückpropagation des adversarialen Verlusts zu trainieren, so dass der adversariale Verlust minimiert wird, und (iv) das Obfuskationsnetzwerk durch die zweite Rückpropagation des Aufgabenverlusts und des adversarialen Verlusts zu trainieren, so dass der Aufgabenverlust minimiert und der adversariale Verlust maximiert wird.

9. Lernvorrichtung (1000) zum Trainieren eines Obfuskationsnetzwerks (1100) mit Fähigkeit zur Obfuskation von Originaldaten auf einem Edge-Gerät mit begrenzten Rechenressourcen für Datenschutz, umfassend:
mindestens einen Speicher (1001), der Anweisungen speichert; und
mindestens einen Prozessor (1002), der dazu eingerichtet ist, die Anweisungen auszuführen, um Prozesse durchzuführen des (I) Eingebens eines Trainingsbilds als Trainingsdaten (10) in das Obfuskationsnetzwerk, um dadurch das Obfuskationsnetzwerk anzuweisen, (i) Merkmale zu extrahieren, die zum Durchführen einer Klassifikationsaufgabe oder einer Regressionsaufgabe oder einer Segmentierungsaufgabe eines Aufgabenlernnetzwerks (1200) verwendet werden, und dadurch eine Datenrepräsentation (20) zu erzeugen, die die extrahierten Merkmale umfasst, indem ein Lernvorgang an den Trainingsdaten ausgeführt wird; und (ii) die Datenrepräsentation zu transformieren und dadurch eine anonymisierte Datenrepräsentation (30) als obfuskierte Daten zu erzeugen, in denen datenschutzbezogene Informationen der Trainingsdaten geschützt und die Aufgabennützlichkeit beibehalten sind; und des (II) Eingebens der anonymisierten Datenrepräsentation in das Aufgabenlernnetzwerk, um dadurch das Aufgabenlernnetzwerk anzuweisen, (i) die Aufgabe unter Verwendung der anonymisierten Datenrepräsentation durchzuführen und dadurch ein Aufgaben-Ergebnis auszugeben, (ii) einen Aufgabenverlust zu erzeugen durch Bezugnahme auf das Aufgaben-Ergebnis und die diesem entsprechende Ground-Truth, (iii) das Aufgabenlernnetzwerk durch eine erste Rückpropagation des Aufgabenverlusts zu trainieren, sodass der Aufgabenverlust minimiert wird, und (iv) das Obfuskationsnetzwerk durch eine zweite Rückpropagation des Aufgabenverlusts zu trainieren, so dass der Aufgabenverlust minimiert wird,
wobei, in dem Prozess (I), der Prozessor eingerichtet ist, die Trainingsdaten in das Obfuskationsnetzwerk einzugeben, um dadurch das Obfuskationsnetzwerk anzuweisen, (i) die Datenrepräsentation zu erzeugen, indem die Trainingsdaten durch ein Kodierungsnetzwerk kodiert werden; und (ii) die anonymisierte Datenrepräsentation zu erzeugen, indem die in der Datenrepräsentation enthaltenen Merkmale durch ein Informationsreduktionsmodul reduziert werden, indem mindestens einer ausgeführt wird von einem (i) einem Frequenzfilterungsprozess, bei dem mindestens ein voreingestelltes Frequenzband der Datenrepräsentation durchgelassen oder verworfen wird, (ii) einem Rauschadditionsprozess, bei dem der Datenrepräsentation Rauschen hinzugefügt wird, (iii) einem Zufallswert-Ersetzungsprozess, bei dem Teile von Pixeln der Datenrepräsentation durch einen Zufallswert ersetzt werden, (iv) einem Zufallsvertauschungsprozess, bei dem Positionsinformationen der Datenrepräsentation zufällig vertauscht werden, und (v) einem Größenänderungsprozess, bei dem eine Kardinalzahl von Pixeln in der Datenrepräsentation so verkleinert wird, dass sie kleiner ist als die Kardinalzahl von Pixeln in den Trainingsdaten, durch das Informationsreduktionsmodul.

## Revendications

1. Procédé de test informatisé pour tester un réseau d'obfuscation (1100) capable d'obfusquer des données d'origine afin d'en préserver la confidentialité, comprenant les étapes suivantes :
a) à condition qu'un dispositif d'entraînement (1000) ait effectué les opérations suivantes :
(I) entrer une image d'entraînement comme données d'entraînement (10) dans le réseau d'obfuscation, afin de donner instruction au réseau d'obfuscation de (i) extraire des caractéristiques d'entraînement destinées à être utilisées pour effectuer une tâche de classification, une tâche de régression ou une tâche de segmentation d'un réseau d'apprentissage de tâches (1200) et ainsi générer une représentation de données (20) pour l'entraînement incluant les caractéristiques extraites pour l'entraînement, en effectuant une opération d'entraînement sur les données d'entraînement ; et (ii) transformer la représentation de données pour l'entraînement et ainsi générer une représentation de données anonymisées (30) pour l'entraînement sous forme de données obfusquées, dans lesquelles les informations relatives à la confidentialité pour l'entraînement des données d'entraînement sont protégées et l'utilité de la tâche est préservée ; et
(II) entrer la représentation des données anonymisées pour l'entraînement dans le réseau d'apprentissage de tâches, afin de donner instruction au réseau d'apprentissage de tâche (i) d'exécuter la tâche en utilisant la représentation des données anonymisées pour l'entraînement et ainsi de produire un résultat de tâche pour l'entraînement, (ii) de générer une perte de tâche en se référant au résultat de tâche pour l'entraînement et à sa vérité de terrain correspondante, (iii) d'entraîner le réseau d'apprentissage de tâche par une première rétropropagation de la perte de tâche de manière à minimiser la perte de tâche et (iv) d'entraîner le réseau d'obfuscation par une deuxième rétropropagation de la perte de tâche de manière à minimiser la perte de tâche, un dispositif de test (2000) acquérant une image de test sous forme de données de test (11) ;
dans lequel, à l'étape (a), le dispositif d'entraînement entre les données d'entraînement dans le réseau d'obfuscation, afin de donner instruction au réseau d'obfuscation (i) de générer la représentation des données en codant les données d'entraînement par un réseau de codage (1110), et (ii) de générer la représentation des données anonymisées en réduisant les caractéristiques incluses dans la représentation des données par un module de réduction d'informations (1120) en effectuant au moins une des opérations suivantes : (i) un processus de filtrage fréquentiel par rejet d'au moins une bande de fréquences prédéfinie de la représentation des données ; (ii) un processus d'ajout de bruit en ajoutant du bruit à la représentation des données ; (iii) un processus de remplacement de valeur aléatoire par remplacement de parties de pixels de la représentation des données par une valeur aléatoire ; (iv) un processus de brassage aléatoire par brassage des informations de position de la représentation des données ; et (v) un processus de redimensionnement par redimensionnement d'un nombre cardinal de pixels de la représentation des données pour qu'il soit inférieur à un nombre cardinal de pixels des données d'entraînement, par le module de réduction d'informations ; et
b) le dispositif de test entre les données de test (11) dans le réseau d'obfuscation, afin de donner instruction au réseau d'obfuscation (i) d'extraire les caractéristiques de test à utiliser pour exécuter la tâche du réseau d'apprentissage de tâches et de générer ainsi une représentation des données de test en effectuant l'opération d'entraînement sur les données de test et (ii) de transformer la représentation des données de test et de générer ainsi une représentation anonymisée des données de test sous forme de données obfusquées, dans lesquelles les informations confidentielles relatives aux données de test sont protégées et l'utilité de la tâche est préservée,
dans ce cas, à l'étape (b), le dispositif de test entre les données de test dans le réseau d'obfuscation, afin de donner instruction au réseau d'obfuscation (i) de générer la représentation des données de test en codant les données de test par un réseau de codage (1110), et (ii) de générer la représentation anonymisée des données de test en réduisant les caractéristiques incluses dans la représentation des données de test par un module de réduction d'informations (1120) en effectuant au moins une des opérations suivantes : (i) un processus de filtrage de fréquence par passage d'au moins une bande de fréquence prédéfinie ou rejet de la bande de fréquences prédéfinie de la représentation des données à tester, (ii) un processus d'ajout de bruit à la représentation des données à tester, (iii) un processus de remplacement de valeur aléatoire par remplacement de parties de pixels de la représentation des données à tester par une valeur aléatoire, (iv) un processus de brassage aléatoire par brassage des informations de position de la représentation des données à tester et (v) un processus de redimensionnement par redimensionnement d'un nombre cardinal de pixels de la représentation des données à tester afin qu'il soit inférieur à un nombre cardinal de pixels des données à tester, par le module de réduction d'information et
(c) le dispositif de test transmet la représentation anonymisée des données à tester à un serveur (3000) sur lequel le réseau d'apprentissage de tâches est installé, afin de donner instruction au serveur d'acquérir un résultat de tâche à tester, dans lequel le réseau d'apprentissage de tâches exécute la tâche en utilisant la représentation anonymisée des données à tester et génère ainsi le résultat de la tâche à tester,
dans lequel le dispositif de test est un périphérique doté de ressources de calcul limitées comprenant le réseau d'obfuscation.

2. Procédé de test selon la revendication 1, dans lequel le dispositif de test ordonne au réseau d'obfuscation (i) d'effectuer le processus de redimensionnement afin de modifier une taille de la représentation des données à tester arbitrairement et ainsi générer une représentation des données à tester redimensionnée arbitrairement ; et (ii) en réponse à la détection qu'une taille de la représentation des données à tester redimensionnée arbitrairement est supérieure à une taille des données à tester, d'effectuer le processus d'ajout de bruit afin de réduire les informations incluses dans la représentation des données à tester redimensionnées arbitrairement.

3. Procédé de test selon la revendication 1, dans lequel le réseau de codage et le réseau d'apprentissage de tâche sont des sous-réseaux inclus dans un réseau neuronal profond capable d'exécuter la tâche en effectuant l'opération d'entraînement sur les données à tester, dans lequel le réseau de codage comprend les couches antérieures du réseau neuronal profond et le réseau d'apprentissage de tâche comprend les couches restantes du réseau neuronal profond.

4. Procédé de test selon la revendication 1, dans lequel, à l'étape (a), le dispositif d'entraînement a entré la représentation des données anonymisées pour l'entraînement dans un réseau antagoniste proxy (1300), afin de donner instruction au réseau antagoniste proxy (i) d'exécuter la tâche antagoniste en utilisant la représentation des données anonymisées pour l'entraînement et de produire ainsi un résultat antagoniste pour l'entraînement dans lequel les informations relatives à la confidentialité pour l'entraînement d'une région d'entraînement liée à la confidentialité sont estimées à partir de la représentation des données anonymisées pour l'entraînement ; (ii) de générer une perte antagoniste en se référant au résultat antagoniste pour l'entraînement et à sa vérité de terrain correspondante ; (iii) d'entraîner le réseau antagoniste proxy par une troisième rétropropagation de la perte antagoniste, de manière à minimiser la perte antagoniste ; et (iv) d'entraîner le réseau d'obfuscation par la deuxième rétropropagation de la perte de tâche et de la perte antagoniste, de manière à minimiser la perte de tâche et à maximiser la perte antagoniste.

5. Procédé d'entraînement informatisé pour l'entraînement d'un réseau d'obfuscation (1100) capable d'obfusquer des données d'origine sur un périphérique disposant de ressources informatiques limitées pour garantir la confidentialité, comprenant les étapes suivantes :
(a) un dispositif d'entraînement (1000) entre une image d'entraînement comme données d'entraînement (10) dans le réseau d'obfuscation, afin de donner instruction au réseau d'obfuscation : (i) d'extraire les caractéristiques à utiliser pour effectuer une tâche de classification, de régression ou de segmentation d'un réseau d'apprentissage de tâches (1200) et ainsi de générer une représentation des données (20) incluant les caractéristiques extraites en effectuant une opération d'entraînement sur les données d'entraînement ; et (ii) de transformer la représentation des données et ainsi de générer une représentation de données anonymisée (30) sous forme de données obfusquées, dans lesquelles les informations relatives à la confidentialité des données d'entraînement sont protégées et l'utilité de la tâche est préservée ; et
(b) le dispositif d'entraînement entre la représentation des données anonymisées dans le réseau d'apprentissage de tâches, afin de donner instruction au réseau d'apprentissage de tâche (i) d'exécuter la tâche en utilisant la représentation de données anonymisées et ainsi produire un résultat de tâche ; (ii) de générer une perte de tâche en se référant au résultat de la tâche et à sa vérité de terrain correspondante ; (iii) d'entraîner le réseau d'apprentissage de tâches par une première rétropropagation de la perte de tâche afin de minimiser la perte de tâche ; et (iv) d'entraîner le réseau d'obfuscation par une deuxième rétropropagation de la perte de tâche afin de de minimiser la perte de tâche,
dans ce cas, à l'étape (a), le dispositif d'entraînement entre les données d'entraînement dans le réseau d'obfuscation, afin de donner instruction au réseau d'obfuscation (i) de générer la représentation des données en codant les données d'entraînement par un réseau de codage (1110) ; et (ii) de générer la représentation des données anonymisées en réduisant les caractéristiques incluses dans la représentation des données par un module de réduction d'informations (1120) en effectuant au moins une des opérations suivantes : (i) un processus de filtrage fréquentiel par passage dans au moins une bande de fréquences prédéfinie ou rejet la bande de fréquence prédéfinie de la représentation de données, (ii) un processus d'ajout de bruit en ajoutant du bruit à la représentation des données, (iii) un processus de remplacement de valeur aléatoire par remplacement de parties de pixels de la représentation des données par une valeur aléatoire, (iv) un processus de brassage aléatoire par brassage des informations de position de la représentation des données et (v) un processus de redimensionnement par redimensionnement d'un nombre cardinal de pixels de la représentation des données pour qu'il soit inférieur à un nombre cardinal de pixels des données d'entraînement, par le module de réduction d'informations.

6. Procédé d'entraînement informatisé selon la revendication 5, dans lequel le dispositif d'entraînement donne instruction au réseau d'obfuscation (i) d'effectuer le processus de redimensionnement pour ainsi modifier arbitrairement une taille de la représentation de données et ainsi générer une représentation de données redimensionnée arbitrairement et (ii) en réponse à la détection qu'une taille de la représentation des données redimensionnée arbitrairement est supérieure à une taille des données d'entraînement, le module de réduction d'informations exécute le processus d'ajout de bruit afin de réduire les informations incluses dans la représentation de données redimensionnée arbitrairement.

7. Procédé d'entraînement informatisé selon la revendication 5, dans lequel le réseau de codage et le réseau d'apprentissage de tâches sont des sous-réseaux inclus dans un réseau neuronal profond capable d'exécuter la tâche en effectuant l'opération d'entraînement sur les données d'entraînement, dans lequel le réseau de codage comprend les couches antérieures du réseau neuronal profond et le réseau d'apprentissage de tâches comprend les couches restantes du réseau neuronal profond.

8. Procédé d'entraînement informatisé selon la revendication 5, dans lequel, à l'étape (b), le dispositif d'entraînement entre la représentation de données anonymisées dans un réseau antagoniste proxy (1300) afin de donner instruction au réseau antagoniste proxy : (i) d'exécuter la tâche antagoniste en utilisant la représentation de données anonymisées et produire ainsi un résultat antagoniste dans lequel les informations relatives à la confidentialité d'une région concernée sont estimées à partir de la représentation de données anonymisées ; (ii) de générer une perte antagoniste en se référant au résultat antagoniste et à sa vérité de terrain correspondante ; (iii) d'entraîner le réseau antagoniste proxy par une troisième rétropropagation de la perte antagoniste afin de minimiser la perte antagoniste ; et (iv) d'entraîner le réseau d'obfuscation par la deuxième rétropropagation de la perte de tâche et de la perte antagoniste afin de minimiser la perte de tâche et de maximiser la perte antagoniste.

9. Dispositif d'entraînement (1000) pour l'entraînement d'un réseau d'obfuscation (1100) capable d'obfusquer des données d'origine sur un périphérique disposant de ressources informatiques limitées pour des raisons de confidentialité, comprenant :
au moins une mémoire (1001) mémorisant des instructions ; et
au moins un processeur (1002) configuré pour exécuter les instructions afin de réaliser les processus suivants : (I) entrer une image d'entraînement comme données d'entraînement(10) dans le réseau d'obfuscation, afin de donner ainsi instruction au réseau d'obfuscation :
(i) d'extraire les caractéristiques à utiliser pour effectuer une tâche de classification, une tâche de régression ou une tâche de segmentation d'un réseau d'apprentissage de tâches (1200) et ainsi générer une représentation de données (20) incluant les caractéristiques extraites en effectuant une opération d'entraînement sur les données d'entraînement ; et (ii) transformer la représentation de données et ainsi générer une représentation de données anonymisée (30) sous forme de données obfusquées dans lesquelles les informations relatives à la confidentialité des données d'entraînement sont protégées et l'utilité de la tâche préservée ; et (II) entrer la représentation des données anonymisées dans le réseau d'apprentissage de tâches, afin de donner instruction au réseau d'apprentissage de tâches (i) d'exécuter la tâche en utilisant la représentation des données anonymisées et ainsi produire un résultat ;
(ii) de générer une perte de tâche en se référant au résultat de la tâche et à sa vérité de terrain correspondante ; (iii) d'entraîner le réseau d'apprentissage de tâches par une première rétropropagation de la perte de tâche afin de la minimiser ; et (iv) d'entraîner le réseau d'obfuscation par une deuxième rétropropagation de la perte de tâche afin de minimiser la perte de tâche,
dans lequel, lors de l'étape (I), le processeur est configuré pour entrer les données d'entraînement dans le réseau d'obfuscation, afin de donner instruction au réseau d'obfuscation (i) de générer la représentation de données en codant les données d'entraînement par un réseau de codage ; et (ii) de générer la représentation des données anonymisées en réduisant les caractéristiques incluses dans la représentation de données par un module de réduction d'informations, en effectuant au moins une des opérations suivantes : (i) un processus de filtrage de fréquence par passage d'au moins une bande de fréquence prédéfinie ou rejet de la bande de fréquences prédéfinie de la représentation de données, (ii) un processus d'ajout de bruit en ajoutant du bruit à la représentation de données, (iii) un processus de remplacement de valeur aléatoire par remplacement de parties de pixels de la représentation des par une valeur aléatoire, (iv) un processus de brassage aléatoire par brassage des informations de position de la représentation des données et (v) un processus de redimensionnement par redimensionnement d'un nombre cardinal de pixels de la représentation de données afin qu'il soit inférieur à un nombre cardinal de pixels des données d'entraînement, par le module de réduction d'information.
